# EUROPEAN PATENT SPECIFICATION

(11) **EP 2 874 433 B1**
(45) Date of publication and mention of the grant of the patent: **18.09.2019**
(21) Application number: 14152057.7
(22) Date of filing: 22.01.2014
(51) Int. Cl.: H04W 36/00, H04W 76/18

(54) **Circuit-switched fallback delay mitigation**
Verzögerungsminderung beim Rückfall zum leitungsvermittelten Netz
Atténuation de retard au recours à commutation de circuits

(30) Priority: 31.10.2013 WO PCT/CN2013/086282
(43) Date of publication of application: 20.05.2015
(73) Proprietor: Spreadtrum Communications (Shanghai) Co., Ltd., Shanghai 201203 (CN)
(72) Inventor: Jiang, Zhenxin, 201203 Shanghai (CN); Gao, Xichun, 201203 Shanghai (CN); Han, Wei, 201203 Shanghai (CN); Chen, Xianliang, 201203 Shanghai (CN)
(74) Representative: Roncuzzi, Davide

(56) References cited:
- WO-A2-2010/120689
- US-A1- 2007 207 824

## Description

### BACKGROUND TO THE INVENTION

Evolved Packet System may be considered a core network supporting the Long Term Evolution wireless mobile radio access technology. In general, circuit-switched fallback in Evolved Packet System enables the provisioning of circuit-switched-domain services (e.g., voice service) by reuse of circuit-switched infrastructure when requested by an appropriately configured mobile user equipment. For example, a particular user equipment configured to support Long Term Evolution and a Second Generation and/or Third Generation radio access technology may initiate, on a Long Term Evolution network, access to a particular circuit-switched service through circuit-switched fallback. The Long Term Evolution network may then redirect the user equipment to a particular Second Generation/Third Generation network for circuit-switched service.

WO2010120689A2 discloses a method and apparatus for processing emergency calls, it aims to find solutions that simplify emergency call setup procedures while minimizing emergency call setup delays, US2007207824A1 discloses a method of efficient utilization of transmission gaps for cell measurements, it does not disclose the distinguished features.

### SUMMARY OF THE PRESENT INVENTION

The invention is defined by the appended claims.

In an aspect, a method for mitigating circuit-switched fallback delay is disclosed.

In an aspect, a method for mitigating circuit-switched fallback delay is disclosed, said method comprising: initiating, by a UE, connection of the UE to a packet-switched network, the UE is a multi-mode UE, the UE camp-on a particular cell of the Evolved UMTS Terrestrial Radio Access Network, the Mobile Management Entity registers the UE with the Evolved UMTS Terrestrial Radio Access Network and the UMTS Terrestrial Radio Access Network/GSM EDGE Radio Access Network; in response to launching of a Mobile Originating Call indication by the UE, sending, by Circuit-Switched Fallback engine of the UE to the packet-switched network, a request for Circuit-Switched Fallback to access a circuit-switched service; with sending of the request message, starting, by the UE concurrently with sending the request message, a timer to determine elapsed duration between sending the request message and receiving a response message from the packet-switched network that confirms resource allocation to access the circuit-switched service; and selecting, by the UE in response to timer expiration, indicating absence of response message to the request message, a particular algorithm that when implemented initiates connection of the UE to a particular circuit-switched network to access the circuit-switched service, the particular circuit-switched network is the UMTS Terrestrial Radio Access Network/GSM EDGE Radio Access Network; determining, by the UE, availability of a listing that specifies measured signal strength of circuit-switched network access points, the listing includes measured signal strength and an associated Timestamp of circuit-switched network access points, the listing can acquired by accessing cell list module through control module of the Circuit-Switched Fallback engine or by activating a signal measurement module upon command from control module of the Circuit-Switched Fallback engine, the control module of the Circuit-Switched Fallback engine activates cell reselection module to implement an inter-RAT cell reselection algorithm to access circuit-switched service based on information within the listing, and in tandem with activation of the signal measurement module, the control module of the Circuit-Switched Fallback engine activates the Public Land Mobile Network selection module to initiate a Public Land Mobile Network selection process to camp-on a particular cell of the UMTS Terrestrial Radio Access Network/GSM EDGE Radio Access Network.

In an aspect, it is disclosed a multi-mode mobile user equipment including a processing unit; a Circuit-Switched Fallback engine, which include a control module, a timer module, a cell list module, a cell reselection module, a signal measurement module, and a Public Land Mobile Network selection module; a system memory connected to the processing unit, the system memory including instructions that, when executed by the processing unit, cause the processing unit to instantiate at least one module to select, in response to expiration of a timer, a particular algorithm that when implemented initiates connection of the UE to a particular circuit-switched network to access a circuit-switched service, the at least one module configured to: initiate connection of the user equipment to a packet-switched network; send to the packet-switched network a request message to access the circuit-switched service; start a timer to determine elapsed duration between sending the request message and receiving a response message from the packet-switched network that confirms resource allocation to access the circuit-switched service; the control module activates the timer module to start a timer that is associated with the request message, at arbitrary time to corresponding to sending of the request message, a timer initialized to zero is started that may keep running track of time until the response message is received by the Circuit-Switched Fallback engine; and select, in response to expiration of the timer module indicating absence of response message to the request message, the particular algorithm that when implemented initiates connection of the user equipment to the particular circuit-switched network to access the circuit-switched service, determine, by the user equipment, availability of a listing that specifies measured signal strength of circuit-switched network access points.

### BRIEF DESCRIPTION OF THE DRAWINGS

A further understanding of the nature and advantages of the present invention may be realized by reference to the remaining portions of the specification, and the drawings, wherein like reference numerals are used throughout to refer to similar components. In some instances, a sub-label may be associated with a reference numeral to denote one of multiple similar components. When reference is made to a reference numeral without specification to an existing sub-label, it is intended to refer to all such multiple similar components.
FIG. 1 shows a block diagram of an example EPS architecture for mitigating circuit-switched fallback delay in accordance with the present disclosure.
FIG. 2 shows an example circuit-switched feedback engine in accordance with the present disclosure.
FIG. 3 shows an example method for mitigating circuit-switched fallback delay in accordance with the present disclosure.
FIG. 4 shows the relationship between example LTE Cells, example 2G/3G cells, and geographic location of a multi-mode mobile user equipment in accordance with the present disclosure.
FIGS. 5 and 6 describe an environment where a connection may be established through the access stratum (AS) and the non-access stratum (NAS) in accordance with the present disclosure.
FIG. 7 shows an example computing system or device.

### DETAILED DESCRIPTION OF THE PRESENT INVENTION

UMTS (Universal Mobile Telecommunication System) is a 3G (Third Generation) wireless telecommunication network technology standard organized and defined by the 3GPP (Third Generation Partnership Project). In general, a UMTS network is composed of a core network and an access network, where the core network may comprise of a CS (Circuit-Switched) domain and a PS (Packet-Switched) domain. The CS domain provides CS-based services, such as voice service, while the PS domain offers PS-based service, such as Internet access. The 3GPP further organizes, maintains, or formulates 2G (Second Generation) standards such as GSM (*Global System for Mobile* Communications), GPRS (*General packet radio service*), EDGE (Enhanced Data rates for GSM Evolution), as well as 3G standards such as W-CDMA (*Wideband Code Division Multiple Access*) and TD-SCDMA (Time Division Synchronous Code Division Multiple Access). The 3G standard CDMA2000 (Code Division Multiple Access) is generally organized and defined by the 3GPP2 (Third Generation Partnership Project 2).

LTE (Long Term Evolution) is a standard for wireless data communications technology, and supports both TDD (Time-Division Duplexing) and FDD (Frequency Division Duplexing). Among 3GPP standard operations, LTE is directed towards access network evolution, while SAE (System Architecture Evolved) is directed towards core network evolution. Both LTE and SAE, however, focus on optimization of PS domain service, as opposed to a combined PS domain service and CS domain service model. For example, in LTE, traditional CS domain voice service is not supported. Instead, voice service(s) may be provided via alternate methods such as, for example, VoLTE (Voice Over LTE), SVLTE (Simultaneous Voice and LTE), and CSFB (Circuit-Switched Fallback).

In the example of CSFB, a particular mobile UE (User Equipment) configured to support both LTE and a 2G and/or 3G RAT (Radio Access Technology) may initiate, on an LTE network, access to a particular CS service through CSFB. For example, the UE may initiate a mobile originating call by sending an ESR (Extended Service Request) for CSFB to a MME (Mobile Management Entity) to coordinate CSFB. For example, the MME may release certain resources and/or modify certain configurations to support access to the particular CS service through CSFB. In certain scenarios, however, an unintended delay may occur between a request for CSFB by the UE, and a response by the LTE network (e.g., MME) indicating certain resources/configurations are or have been allocated to support CSFB. For example, signal strength between the UE and LTE network may be prohibitively weak for transmission of the request to the LTE network. In another example, the LTE network may take an "excessive" amount of time to process the request. In these and other examples, the UE may be unable to start or otherwise access CS service in a timely manner. This may be perceived by an end user as a relatively "poor" quality of service. The present disclosure addresses these and other issues by providing systems and methods to mitigate CSFB delay.

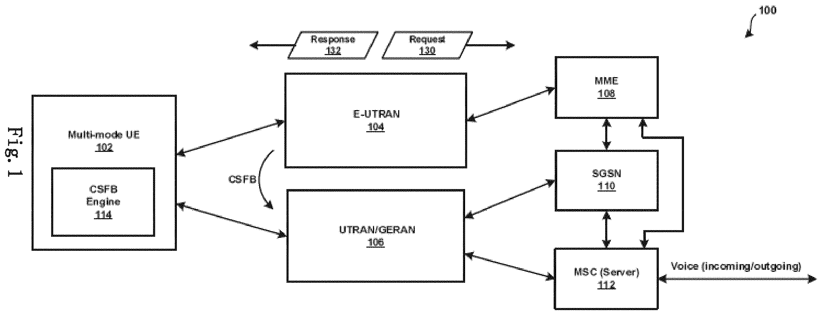

For example, referring now to FIG. 1, a block diagram 100 of an example EPS architecture for mitigating circuit-switched fallback delay is shown in accordance with the present disclosure. For brevity, the example diagram 100 is depicted in a simplified and conceptual form, and may generally include more or fewer systems, devices, networks, and/or other components as desired. Further, number and type of features or elements incorporated within the diagram 100 may or may not be implementation-specific. Still further, while certain connections are shown between certain features or elements within the diagram 100, other additional or alternative connections are possible.

In the present example, the diagram 100 illustrates a multi-mode UE 102, a E-UTRAN (Evolved UMTS Terrestrial Radio Access Network) 104, a UTRAN/GERAN (UMTS Terrestrial Radio Access Network/GSM EDGE Radio Access Network) 106, at least one MME (Mobile Management Entity) 108, at least one SGSN (Serving GPRS Support Node) 110, and at least one MSC (Mobile Switching Center/Server) 112. Here, in the example of a GSM network, the MSC 112 may refer to a Mobile Switching Center. In the example of a 3G network, the MSC 112 may refer to a Mobile Switching Server.

In practice, the MME 108 serves the UE 102 via the E-UTRAN 104 when in LTE access mode. The SGSN 110 serves the UE 102 via the UTRAN/GERAN 106 when in 2G/3G access mode, for data services. The MSC 112 serves the UE 102 via the UTRAN/GERAN 106 when in 2G/3G access mode, for voice services. A CSFB engine 114 of the UE 102 may be configured to interact with at least one or both of the MME 108 and the MSC 112 to coordinate redirection of the UE 102 from the E-UTRAN 104 to the UTRAN/GERAN 106 for CS service. Additionally, the CSFB engine 114 may be configured to mitigate circuit-switched fallback delay in accordance with the present disclosure.

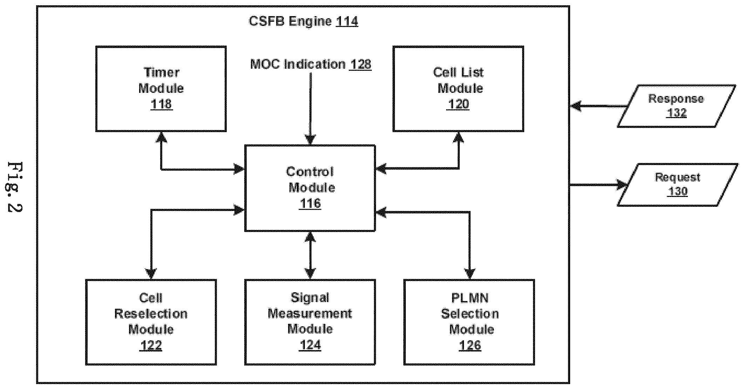

For example, referring now additionally to FIG. 2, the CSFB engine 114 is shown in accordance with the present disclosure. In particular, the CSFB engine 114 is shown to include a control module 116, a timer module 118, a cell list module 120, a cell reselection module 122, a signal measurement module 124, and a PLMN (Public Land Mobile Network) selection module 126. In the following, it is assumed that the UE 102 is initially camped-on a particular cell of the E-UTRAN 104, and may or may not be accessing a particular packet-switched service offered by the E-UTRAN 104, such as Internet access. Other embodiment are possible.

While the UE 102 is camped-on a particular cell of the E-UTRAN 104, the control module 116 may receive a MOC (Mobile Originating Call) indication 128 from the UE 102. For example, a user of the UE 102 may initiate a voice call using the UE 102. In response to receiving the MOC indication 128, the control module 116 may send a request message 130 to the MME 108 for CSFB from the E-UTRAN 104 to the UTRAN/GERAN 106 for access to CS (Circuit-Switched) voice service. Concurrently, or at least "approximately" concurrently or "about" concurrently, with sending of the request message 130, the control module 116 may activate the timer module 118 to start or otherwise instantiate a particular timer that is associated with the request message 130. For example, at arbitrary time t₀ corresponding to sending of the request message 130, a timer "A" initialized to zero (0) (e.g., t₀ = 0) may be started that may keep running track of time (e.g., with reference to a particular clock of the UE 102) until a response message 132 is received by the CSFB engine 114. The response message 132 may confirm release of certain resources and/or modification of certain configurations, as coordinated by at least the MME 108, to support CSFB from the E-UTRAN 104 to the UTRAN/GERAN 106. When CSFB is successfully "completed," the user of the UE 102 may engage in a voice call using the UE 102.

In the present example, when the response message 132 is received before the passage of a predetermined period of time, as gauged by the timer module 118, the CSFB engine 114 may proceed to initiate connection of the UE 102 to the UTRAN/GERAN 106 for access to CS voice service. For example, when the response message 132 is received within a time period defined as tₜ-t₀, where tₜ is an integer value that corresponds to a configurable response threshold and t₀ = 0, the CSFB engine 114 may proceed to initiate connection of the UE 102 to the UTRAN/GERAN 106 for access to CS voice service.

In certain scenarios, however, an unintended or undesired delay may occur between sending of the request message 130 and receiving of the response message 132 where, in some instances, the response message 132 may not be received at all. Such a scenario may be identified when the response message 132 is received following passage of the predetermined period of time discussed above. For example, this may occur when the response message 132 is received at a time t₁ ≥ tₜ, where t₁ is an integer value greater than or at least equal to the configurable response threshold tₜ. Such an event may be referred to as "CSFB failure," where it may be determined by the UE 102 that the CSFB engine 114 is unable to proceed to initiate connection of the UE 102 to the UTRAN/GERAN 106. Here, the CSFB engine 114 may discontinue its attempt to initiate connection of the UE 102 to the UTRAN/GERAN 106 for access to CS voice service. An end user may perceive this as an "incomplete" call or a "dropped" call, etc.

In another example, however, the CSFB engine 114 may continue its attempt to initiate connection of the UE 102 to the UTRAN/GERAN 106 following expiration of the timer (e.g., t₁ ≥ tₜ in the discussed example), independent of further interaction with the E-UTRAN 104, at least with respect to CSFB. Such an implementation may be referred to as "circuit-switched fallback delay mitigation" in accordance with the present disclosure.

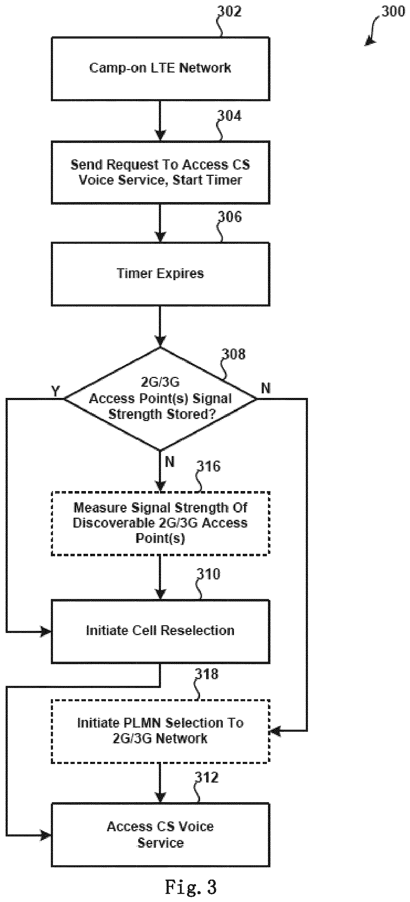

For example, referring now additionally to FIG. 3, an example method 300 for mitigating circuit-switched fallback delay is shown in accordance with the present disclosure. In general, the example method 300 may be wholly or at least partially implemented by a special-purpose computing system or device, which itself may, in some embodiments, be configured based on implementation-specific requirements or specifications. For example, the method 300 is described with reference to the UE 102, along with other components of the diagram 100, as described above in connection with FIG. 1 and FIG. 2. Other embodiments are possible.

At operation 302, the UE 102 may camp-on a particular cell of the E-UTRAN 104. Upon residing on the particular cell, the MME 108 may register the UE 102 with the E-UTRAN 104 and the UTRAN/GERAN 106. In one embodiment, the UE 102 may initiate connection to the E-UTRAN 104 at operation 302 upon a power-on event of the UE 102. Additionally, the UE 102 may enter into an operating state selected from an idle mode and active mode at or during operation 302. In general, idle mode may correspond to a state by which a reduced amount of resources are allocated to communication with the E-UTRAN 104, as compared to active mode. When in idle mode, the UE 102 may enter into active mode to access service(s) provided by the E-UTRAN 104. Other embodiments are possible.

At operation 304, the UE 102 may send the request message 130 to the MME 108 for CSFB from the E-UTRAN 104 to the UTRAN/GERAN 106 for access to CS voice service. In one embodiment, the UE 102 may send the request message 130 to the MME 108 in response to receiving the MOC indication 128 from the UE 102, corresponding to a user of the UE 102 initiating a voice call (e.g., mobile originating call) using the UE 102, as discussed above. Additionally, at operation 304, the UE 102 may concurrently activate the timer module 118 and start or otherwise instantiate a particular timer that is associated with the request message 130. Here, the particular timer is configured to determine elapsed duration between sending of the request message 130 and receiving of the response message 132 (if received at all), where timer expiration indicates lack of receiving the response message 132 within a predetermined, user-configurable time period.

In accordance with the present disclosure, upon expiration of the timer, the UE 102 is not configured to discontinue its attempt to initiate connection to the UTRAN/GERAN 106 for access to CS voice service. Rather, the UE 102 is configured to continue its attempt to initiate connection of the UE 102 to the UTRAN/GERAN 106, following expiration of the timer, in a "circuit-switched fallback delay mitigation" implementation.

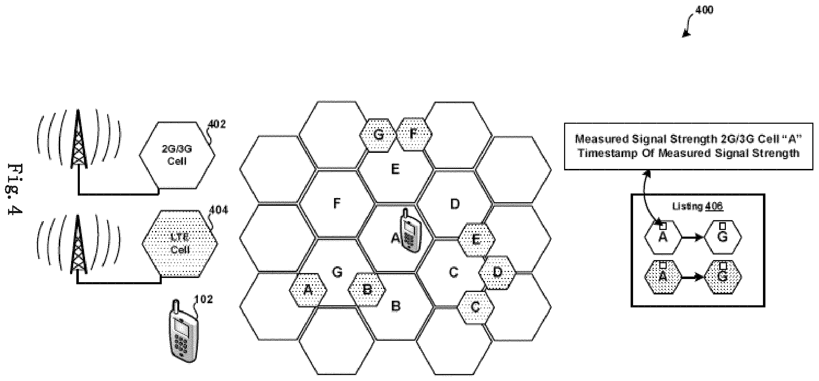

For example, at operation 306, the UE 102 may determine that the timer has expired, indicating that the response message 132 has not been received within the predetermined, user-configurable time period. Next, at operation 308, a determination may be made by the UE 102 as to whether a listing is available that specifies measured signal strength of one or more circuit-switched network access points (e.g., signal strength of a particular base station transmitter). For example, referring additionally now to FIG. 2, the control module 116 of the CSFB engine 114 may access the cell list module 120 to determine whether the UE 102 has previously measured and stored signal strength of particular circuit-switched network access points of the UTRAN/GERAN 106. Details associated with the listing of the cell list module 120, as well as measuring and storing signal strength of particular circuit-switched network access points, are discussed in further detail below in connection with FIG. 4.

Flow may branch to operation 310 upon determination that a listing that specifies measured signal strength of circuit-switched network access points is available at operation 308. At operation 310, the UE 102 may initiate connection of the UE 102 to the UTRAN/GERAN 106 to access CS voice service. For example, the control module 116 of the CSFB engine 114 may activate the cell reselection module 122 to implement an inter-RAT (Radio Access Technology) cell reselection algorithm (e.g., "inter" because cell reselection may be performed across 2G and/or 3G networks) to access CS voice service based on information within the listing (e.g. see operation 308).

In some embodiments, the control module 116 may rank access points within the listing according to signal strength, and then activate the cell reselection module 122 to implement an inter-RAT cell reselection algorithm. Still other embodiments are possible. For example, the control module 116 may select a particular access point within the listing having signal strength at least greater than other access points within the listing, and then activate the cell reselection module 122 to implement an inter-RAT cell reselection algorithm. Such an implementation may, among other things, ensure that a target cell has a strong enough signal such that the UE 102 may camp-on the target cell following inter-RAT cell reselection. Flow may then proceed to operation 312 following operation 310. At operation 312, CSFB according to the present disclosure may be "completed," and the UE 102 may access CS voice service as offered by the UTRAN/GERAN 106.

Referring back to operation 308, flow may optionally (indicated by intermittent line in FIG. 3) branch to operation 316 or operation 318 upon determination that a listing that specifies measured signal strength of circuit-switched network access points is unavailable at operation 308. Flow may be directed between or to operation 316 and operation 318 by the control module 116 of the CSFB engine 114. For example, the control module 116 may be programmed to direct flow to operation 316, instead of operation 318, based on certain criteria. For example, flow may be directed to operation 316 upon a number of discoverable 2G/3G access points exceeding a predetermined number, such as greater than or at least equal to one (1) for example. In contrast, flow may be directed to operation 318 upon a number of discoverable 2G/3G access points being less than the predetermined number. Other embodiments are possible. For example, flow may be directed to operation 318 directly upon determination that a listing that specifies measured signal strength of circuit-switched network access points is unavailable at operation 308. Still other embodiments are possible.

At operation 316, the UE 102 may measure and store signal strength of discoverable circuit-switched network access points of the UTRAN/GERAN 106. For example, the control module 116 of the CSFB engine 114 may activate the signal measurement module 124 to measure signal strength of an associated discoverable circuit-switched network access point. Details associated with measuring and storing signal strength of particular circuit-switched network access points by the signal measurement module 124 are discussed in further detail below in connection with FIG. 4. Following operation 316, flow may then proceed to operation 310, and then operation 312, in a manner as described above. In particular, at operation 312, CSFB according to the present disclosure may be "completed," and the UE 102 may access CS voice service as offered by the UTRAN/GERAN 106.

Referring back to operation 308, as mentioned above, flow may optionally branch to operation 318. At operation 318, the UE 102 may initiate a PLMN (Public Land Mobile Network) selection process to camp-on a particular cell of the UTRAN/GERAN 106. In particular, the control module 116 of the CSFB engine 114 may activate the PLMN selection module 126 of FIG. 2, in certain implementations in tandem with activation of the signal measurement module 124, to initiate a PLMN (Public Land Mobile Network) selection process to camp-on a particular cell of the UTRAN/GERAN 106. PLMN selection may be considered a "supplement" to inter-RAT cell reselection. This is because, generally, a PLMN connects to a PSTN (Public Switched Telephone Network). In this manner, CSFB according to the present disclosure may be "completed" by PLMN selection such that the UE 102, once camped-on a particular cell of the UTRAN/GERAN 106, may access CS voice service. For example, following operation 316, flow may then proceed to operation 312 where CSFB according to the present disclosure may be "completed," and the UE 102 may access CS voice service as offered by the UTRAN/GERAN 106.

The example method 300 of FIG. 3 may be beneficial in many respects. For example, when the UE 102 does not timely receive the response message 132 from the E-UTRAN 104 for CSFB, the UE 102 may discontinue seeking CSFB supported by the E-UTRAN 104, and independently launch an inter-RAT cell reselection process or a PLMN selection process to acquire the UTRAN/GERAN 106. As a result, the UE 102 may decrease waiting time(s) for indication(s) from the E-UTRAN 104, and avoid CSFB failure due to network and other issues (e.g., poor signal strength, etc.). This may at least improve customer quality of experience and satisfaction.

Additionally or alternately, when the UE 102 does not timely receive the response message 132 from the E-UTRAN 104 for CSFB, the UE 102 may discontinue seeking CSFB supported by the E-UTRAN 104, and independently launch an inter-RAT cell reselection process to acquire the UTRAN/GERAN 106 by referring to existing access point measurement results of the UTRAN/GERAN 106 (e.g., measured signal strength of 2G/3G neighbor cells). As a result, the UE 102 may at least decrease inter-RAT cell reselection period, and improve probability of success for cell reselection to the UTRAN/GERAN 106.

Additionally or alternately, when the UE 102 does not timely receive the response message 132 from the E-UTRAN 104 for CSFB, the UE 102 may discontinue seeking CSFB supported by the E-UTRAN 104, and independently launch an inter-RAT cell reselection process to acquire the UTRAN/GERAN 106 by referring to existing access point measurement results of the UTRAN/GERAN 106 (e.g., as contained within the "listing" discussed above). In this example, the measurement results may be ranked, and the inter-RAT cell reselection process may be implemented in accordance with the ranked results. As a result, the UE 102 may at least decrease inter-RAT cell reselection period, and improve probability of success for cell reselection to the UTRAN/GERAN 106.

Additionally or alternately, when the UE 102 does not timely receive the response message 132 from the E-UTRAN 104 for CSFB, the UE 102 may discontinue seeking CSFB supported by the E-UTRAN 104, and independently launch an inter-RAT cell reselection process to acquire the UTRAN/GERAN 106 by referring to existing access point measurement results of the UTRAN/GERAN 106 (e.g., as contained within the "listing" discussed above). In this example, the measurement results may be ranked, and the inter-RAT cell reselection process may be preferentially implemented with regard to a "strongest" ranked result. As a result, the UE 102 may at least simplify cell reselection, and decrease inter-RAT cell reselection period.

Additionally or alternately, when the UE 102 does not timely receive the response message 132 from the E-UTRAN 104 for CSFB, the UE 102 may discontinue seeking CSFB supported by the E-UTRAN 104, and independently launch an inter-RAT cell reselection process to acquire the UTRAN/GERAN 106 by measuring and storing access point measurement results (e.g., measuring signal strength of discoverable access points, and storing within the "listing" discussed above) of the UTRAN/GERAN 106. In this example, the inter-RAT cell reselection process may be implemented with regard to the "most recent" signal strength measurement. As a result, the UE 102 may at least improve probability of success for cell reselection to the UTRAN/GERAN 106.

Additionally or alternately, when the UE 102 does not timely receive the response message 132 from the E-UTRAN 104 for CSFB, the UE 102 may discontinue seeking CSFB supported by the E-UTRAN 104, and when the UE 102 determines unavailability of a listing that specifies measured signal strength of circuit-switched network access points (e.g., see operation 308), the UE 102 may optionally implement PLMN selection to the UTRAN/GERAN 106.

Other benefits and/or advantages of the example method 300 of FIG. 3 may be understood from the above-description provided in connection with FIG. 1 and FIG. 2, and from the below-description provided in connection with FIG. 4.

For example, referring now to FIG. 4, the relationship between example LTE Cells, example 2G/3G cells, and geographic location of a multi-mode mobile user equipment is shown in accordance with the present disclosure. In particular, a diagram 400 of FIG. 4 shows overlap between legacy cells 402 of the UTRAN/GERAN 106, and LTE cells 404 of the E-UTRAN 104 in relation to position of the UE 102. Other embodiments are possible.

In this example, simplified for purpose of discussion, a listing 406 is shown to specify 2G/3G cells "A-G" and LTE cells "A-G." Associated with each respective one of the 2G/3G cells "A-G," and LTE cells "A-G," is a corresponding "Measured Signal Strength" and an associated "Timestamp." The "Measured Signal Strength" and an associated "Timestamp" may be acquired by the signal measurement module 124 upon command by the control module 116 of the CSFB engine 114 of FIG. 2. For example, when the UE 102 is positioned within 2G/3G cell "A" as shown in FIG. 4, the control module 116 may activate the signal measurement module 124 which, in turn, may "discover" one or more of the 2G/3G cells "A-G" and LTE cells "A-G," measure signal strength of the one or more of the 2G/3G cells "A-G" and LTE cells "A-G," and then populate the listing 406 with measured signal strength(s) along with a corresponding timestamp.

The listing 406 of FIG. 4 may corresponding to the "listing" discussed above in connection with FIG. 3. Thus, the example listing 406 may be used within a "circuit-switched fallback delay mitigation" implementation as discussed throughout the present disclosure. For example, in some embodiments, the control module 116 may evaluate measured signal strength(s), along with a corresponding timestamp, within the listing 406 to identify a "strongest" signal strength and/or a "most recent" single measurement such that the UE 102 may continue its attempt to initiate connection of the UE 102 to the UTRAN/GERAN 106 following expiration of the timer of the timer module 118 as discussed above.

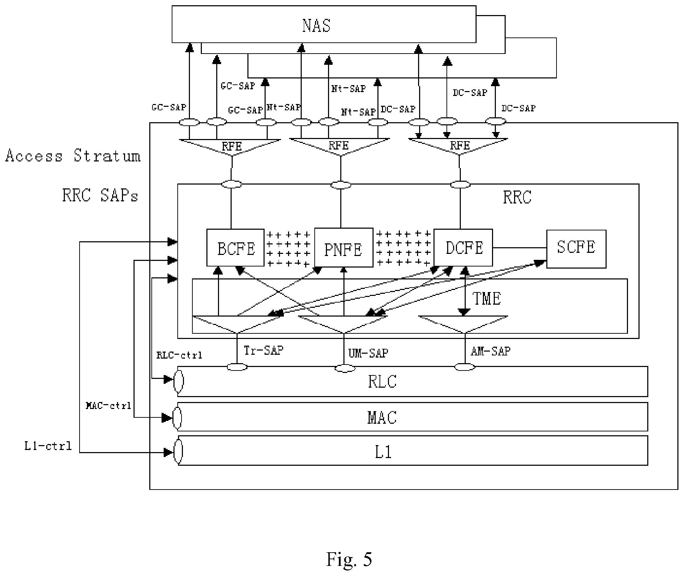

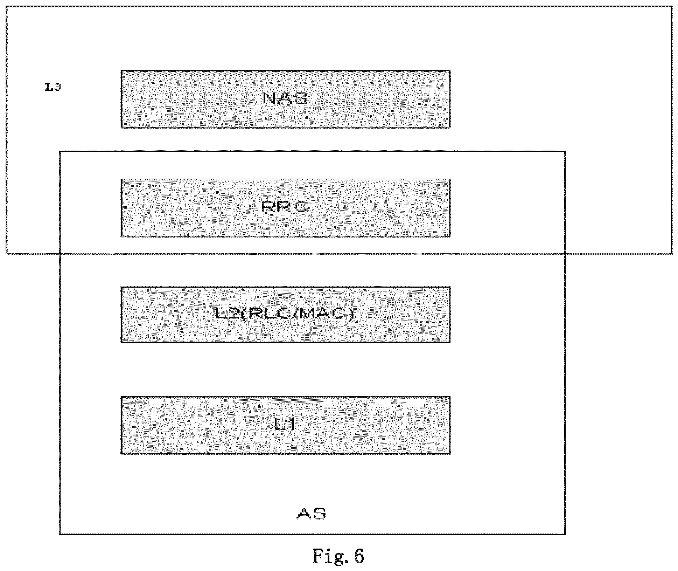

In one embodiment, FIGs. 5 and 6 describe an environment where a connection may be established through the AS and the NAS. The AS is a component associated with the wireless connection, and the NAS is a component not associated with the wireless connections, or the part of the core network, responsible for starting the UE, registration, location update, initiating CS or PS requests, etc. Cell selection originates from PRC, and the PLMN selection originates from NAS.

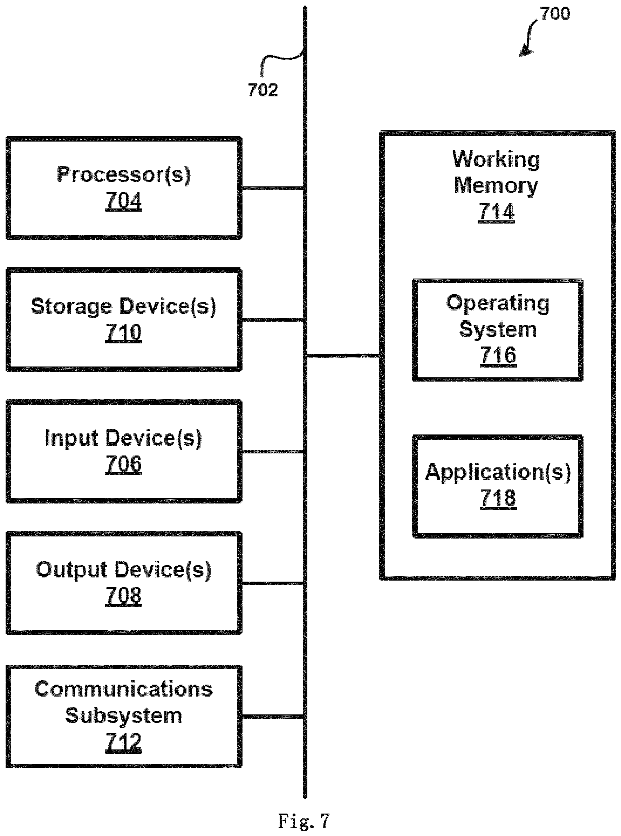

FIG. 7 illustrates an embodiment of an example computer system/device 700. An example of a computer system or device includes a multi-mode mobile user equipment or terminal (e.g., a smartphone configured to access multiple RATs), a server computer, desktop computer, laptop computer, personal data assistant, gaming console, and others. The example computer device 700 may be configured to perform and/or include instructions that, when executed, cause the computer system 700 to perform the example method of FIG. 1. The computer system 700 may be wholly or at least partially incorporated as part of previously-described computing devices, such as the UE 102, E-UTRAN 104, UTRAN/GERAN 106, MME 108, SGSN 110, and MSC 112 of FIG. 1. It should be noted that FIG. 7 is intended only to provide a generalized illustration of various components, any or all of which may be utilized as appropriate. FIG. 7, therefore, broadly illustrates how individual system elements may be implemented in a relatively separated or relatively more integrated manner.

The computer device 700 is shown comprising hardware elements that can be electrically coupled via a bus 702 (or may otherwise be in communication, as appropriate). The hardware elements may include a processing unit with one or more processors 704, including without limitation one or more general-purpose processors and/or one or more special-purpose processors (such as digital signal processing chips, graphics acceleration processors, and/or the like); one or more input devices 706, which can include without limitation a remote control, a mouse, a keyboard, and/or the like; and one or more output devices 708, which can include without limitation a presentation device (e.g., television), a printer, and/or the like.

The computer system 700 may further include (and/or be in communication with) one or more non-transitory storage devices 710, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer device 700 might also include a communications subsystem 712, which can include without limitation a modem, a network card (wireless or wired), an infrared communication device, a wireless communication device, and/or a chipset (such as a Bluetooth™ device, an 802.11 device, a WiFi device, a WiMax device, cellular communication facilities (e.g., GSM, WCDMA, LTE, etc.), and/or the like. The communications subsystem 712 may permit data to be exchanged with a network (such as the network described below, to name one example), other computer systems, and/or any other devices described herein. In many embodiments, the computer system 700 will further comprise a working memory 714, which can include a RAM or ROM device, as described above.

The computer device 700 may also comprise software elements, shown as being currently located within the working memory 714, including an operating system 716, device drivers, executable libraries, and/or other code, such as one or more application programs 718, which may comprise computer programs provided by various embodiments, and/or may be designed to implement methods, and/or configure systems, provided by other embodiments, as described herein. Merely by way of example, one or more procedures described with respect to the method(s) discussed above, and/or system components might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a non-transitory computer-readable storage medium, such as the storage device(s) 710 described above. In some cases, the storage medium may be incorporated within a computer system, such as computer system 700. In other embodiments, the storage medium might be separate from a computer system (e.g., a removable medium, such as flash memory), and/or provided in an installation package, such that the storage medium can be used to program, configure, and/or adapt a general purpose computer with the instructions/code stored thereon. These instructions might take the form of executable code, which is executable by the computer device 700 and/or might take the form of source and/or installable code, which, upon compilation and/or installation on the computer system 700 (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer system (such as the computer device 700) to perform methods in accordance with various embodiments of the invention. According to a set of embodiments, some or all of the procedures of such methods are performed by the computer system 700 in response to processor 704 executing one or more sequences of one or more instructions (which might be incorporated into the operating system 716 and/or other code, such as an application program 718) contained in the working memory 714. Such instructions may be read into the working memory 714 from another computer-readable medium, such as one or more of the storage device(s) 710. Merely by way of example, execution of the sequences of instructions contained in the working memory 714 might cause the processor(s) 704 to perform one or more procedures of the methods described herein.

The terms "machine-readable medium" and "computer-readable medium," as used herein, refer to any medium that participates in providing data that causes a machine to operate in a specific fashion. In an embodiment implemented using the computer device 700, various computer-readable media might be involved in providing instructions/code to processor(s) 704 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 710. Volatile media include, without limitation, dynamic memory, such as the working memory 714.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 704 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 700.

The communications subsystem 712 (and/or components thereof) generally will receive signals, and the bus 702 then might carry the signals (and/or the data, instructions, etc. carried by the signals) to the working memory 714, from which the processor(s) 704 retrieves and executes the instructions. The instructions received by the working memory 714 may optionally be stored on a non-transitory storage device 710 either before or after execution by the processor(s) 704.

The methods, systems, and devices discussed above are examples. Various configurations may omit, substitute, or add various method steps or procedures, or system components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Furthermore, the example embodiments described herein may be implemented as logical operations in a computing device in a networked computing system environment. The logical operations may be implemented as any combination of: (i) a sequence of computer implemented instructions, steps, or program modules running on a computing device; and (ii) interconnected logic or hardware modules running within a computing device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for mitigating circuit-switched fallback delay, comprising:
initiating, by a UE (102), connection of the UE to a packet-switched network, wherein,
the UE (102) is a multi-mode UE (102), the UE (102) camp-on a particular cell of the Evolved UMTS Terrestrial Radio Access Network (104), the Mobile Management Entity (108) registers the UE (102) with the Evolved UMTS Terrestrial Radio Access Network (104) and the UMTS Terrestrial Radio Access Network/GSM EDGE Radio Access Network (106) ; in response to launching of a Mobile Originating Call indication (128) by the UE (102), sending, by Circuit-Switched Fallback engine (114) of the UE (102) to the packet-switched network, a request for Circuit-Switched Fallback to access a circuit-switched service;
with sending of the request message (130), starting, by the UE (102)concurrently with sending the request message (130), a timer to determine elapsed duration between sending the request message (130) and receiving a response message (132) from the packet-switched network that confirms resource allocation to access the circuit-switched service; and
selecting, by the UE (102) in response to timer expiration, indicating absence of response message (132) to the request message (130), a particular algorithm that when implemented initiates connection of the UE (102) to a particular circuit-switched network to access the circuit-switched service, the particular circuit-switched network is the UMTS Terrestrial Radio Access Network/GSM EDGE Radio Access Network (106) ;
determining, by the UE (102), availability of a listing that specifies measured signal strength of circuit-switched network access points, the listing includes measured signal strength and an associated Timestamp of circuit-switched network access points, the listing can acquired by accessing cell list module through control module (116) of the Circuit-Switched Fallback engine (114) or by activating a signal measurement module (124) upon command from control module (116) of the Circuit-Switched Fallback engine (114), the control module (116) of the Circuit-Switched Fallback engine (114) activates cell reselection module (122) to implement an inter-RAT cell reselection algorithm to access circuit-switched service based on information within the listing, and in tandem with activation of the signal measurement module (124), the control module (116) of the Circuit-Switched Fallback engine (114) activates the Public Land Mobile Network selection module (126) to initiate a Public Land Mobile Network selection process to camp-on a particular cell of the UMTS Terrestrial Radio Access Network/GSM EDGE Radio Access Network (106).

2. The method of claim 1, further comprising, upon determining availability of the listing, implementing an inter-RAT cell reselection algorithm to access the circuit-switched service based on access points within the listing.

3. The method of claim 1, further comprising, upon determining availability of the listing, ranking access points within the listing according to signal strength, and implementing an inter-RAT cell reselection algorithm to access the circuit-switched service based on the ranking.

4. The method of claim 1, further comprising, upon determining availability of the listing, selecting a particular access point within the listing having signal strength at least greater than other access points within the listing, and implementing an inter-RAT cell reselection algorithm to connect to the UE (102) to the particular access point to access the circuit-switched service.

5. The method of claim 1, further comprising, upon determining unavailability of the listing, measuring signal strength of discoverable circuit-switched network access points, and implementing an inter-RAT cell reselection algorithm to access the circuit-switched service based on measured signal strength of the discoverable circuit-switched network access points.

6. The method of claim 1, further comprising, upon determining unavailability of the listing, measuring signal strength of discoverable circuit-switched network access points, ranking access points according to measured signal strength, and implementing an inter-RAT cell reselection algorithm to access the circuit-switched service based on the ranking.

7. The method of claim 1, further comprising, upon determining unavailability of the listing, measuring signal strength of discoverable circuit-switched network access points, selecting a particular access point having a measured signal strength at least greater than other measured signal strengths, and implementing an inter-RAT cell reselection algorithm to connect to the UE (102) to the particular access point to access the circuit-switched service.

8. A multi-mode mobile user equipment, used to implementing the method according to claim 1, comprising:
a processing unit; and
a Circuit-Switched Fallback engine (114), include a control module (116), a timer module (118), a cell list module (120), a cell reselection module (122), a signal measurement module (124), and a Public Land Mobile Networkselection module (126) ;
wherein, a system memory connected to the processing unit, the system memory including instructions that, when executed by the processing unit, cause the processing unit to instantiate at least one module to select, in response to expiration of a timer, a particular algorithm that when implemented initiates connection of the user equipment to a particular circuit-switched network to access a circuit-switched service, the at least one module configured to:
initiate connection of the UE to a packet-switched network;
send to the packet-switched network a request message (130) to access the circuit-switched service;
start a timer to determine elapsed duration between sending the request message (130) and receiving a response message (132) from the packet-switched network that confirms resource allocation to access the circuit-switched service; the control module (116) activates the timer module (118) to start a timer that is associated with the request message (130), at arbitrary time to corresponding to sending of the request message (130), a timer initialized to zero is started that may keep running track of time until the response message (132) is received by the Circuit-Switched Fallback engine (114);
select, in response to expiration of the timer indicating absence of response message (130) to the request message (132), the particular algorithm that when implemented initiates connection of the user equipment to the particular circuit-switched network to access the circuit-switched service, and
determine, by the user equipment, availability of a listing that specifies measured signal strength of circuit-switched network access points.

## Patentansprüche

1. Ein Verfahren zum Mindern einer Verzögerung beim leitungsvermittelten Rückfall, das Folgendes beinhaltet:
Initiieren, durch ein UE (102), einer Verbindung des UE mit einem paketvermittelten Netz, wobei,
das UE (102) ein Multimodus-UE (102) ist, das UE (102) im Wartezustand auf einer bestimmten Zelle des Evolved-UMTS-Terrestrial-Radio-Access-Network(entwickelten terrestrischen UMTS-Funkzugangsnetzes) (104) ist, die Mobil-Management-Entität (108) das UE (102) mit dem Evolved-UMTS-Terrestrial-Radio-Access-Network (104) und dem UMTS-Terrestrial-Radio-Access-Network/GSM-EDGE-Radio-Access-Network (GSM-EDGE-Funkzugangsnetz) (106) registriert; als Reaktion auf das Einleiten einer Mobil-Originating-Call-Anzeige (Anzeige von Ruf aus dem Festnetz ins Mobilfunknetz) (128) durch das UE (102), Senden, durch eine Maschine für den leitungsvermittelten Rückfall (114) des UE (102) an das paketvermittelte Netz, einer Anforderung für einen leitungsvermittelten Rückfall, um Zugang zu einem leitungsvermittelten Dienst zu erhalten;
mit dem Senden der Anforderungsnachricht (130), Starten, durch das UE (102) gleichzeitig mit dem Senden der Anforderungsnachricht (130), eines Zeitmessers zum Bestimmen der verstrichenen Dauer zwischen dem Senden der Anforderungsnachricht (130) und dem Empfangen einer Antwortnachricht (132) von dem paketvermittelten Netz, die die Ressourcenzuteilung bestätigt, um Zugang zu dem leitungsvermittelten Dienst zu erhalten; und
Auswählen, durch das UE (102) als Reaktion auf den Zeitmesserablauf, wodurch die Abwesenheit einer Antwortnachricht (132) auf die Anforderungsnachricht (130) angezeigt wird, eines bestimmten Algorithmus, der, wenn implementiert, eine Verbindung des UE (102) mit einem bestimmten leitungsvermittelten Netz initiiert, um Zugang zu dem leitungsvermittelten Netz zu erhalten, wobei das bestimmte leitungsvermittelte Netz das UMTS-Terrestrial-Radio-Access-Network/GSM-EDGE-Radio-Access-Network (106) ist;
Bestimmen, durch das UE (102), einer Verfügbarkeit einer Auflistung, die eine gemessene Signalstärke der leitungsvermittelten Netzzugangspunkte spezifiziert, wobei die Auflistung eine gemessene Signalstärke und einen assoziierten Zeitstempel der leitungsvermittelten Netzzugangspunkte umfasst, wobei die Auflistung durch Zugang auf das Zellenlistenmodul über ein Steuerungsmodul (116) der Maschine für den leitungsvermittelten Rückfall (114) oder durch Aktivieren eines Signalmessungsmoduls (124) auf Befehl von dem Steuerungsmodul (116) der Maschine für den leitungsvermittelten Rückfall (114) erlangt werden kann, wobei das Steuerungsmodul (116) der Maschine für den leitungsvermittelten Rückfall (114) ein Zellenneuauswahlmodul (122) aktiviert, um einen Inter-RAT-Zellenneuauswahl-Algorithmus zu implementieren, um basierend auf Informationen in der Auflistung Zugang zu dem leitungsvermittelten Netz zu erhalten, und wobei in Tandem mit der Aktivierung des Signalmessungsmoduls (124) das Steuerungsmodul (116) der Maschine für den leitungsvermittelten Rückfall (114) das Public-Land-Mobile-Network-Auswahlmodul (Auswahlmodul für öffentliches terrestrisches Mobilfunknetz) (126) aktiviert, um einen Public-Land-Mobile-Network-Auswahl-Prozess zu initiieren, um auf einer bestimmten Zelle des UMTS-Terrestrial-Radio-Access-Network/GSM-EDGE-Radio-Access-Network (106) in einen Wartezustand zu gehen.

2. Verfahren gemäß Anspruch 1, das ferner, nach Bestimmen der Verfügbarkeit der Auflistung, das Implementieren eines Inter-RAT-Zellenneuauswahl-Algorithmus beinhaltet, um basierend auf Zugangspunkten in der Auflistung Zugang zu dem leitungsvermittelten Dienst zu erhalten.

3. Verfahren gemäß Anspruch 1, das ferner, nach Bestimmen der Verfügbarkeit der Auflistung, das Einordnen von Zugangspunkten in der Auflistung gemäß Signalstärke und das Implementieren eines Inter-RAT-Zellenneuauswahl-Algorithmus, um basierend auf dem Einordnen Zugang zu dem leitungsvermittelten Dienst zu erhalten, beinhaltet.

4. Verfahren gemäß Anspruch 1, das ferner, nach Bestimmen der Verfügbarkeit der Auflistung, das Auswählen eines bestimmten Zugangspunktes in der Auflistung, der eine Signalstärke aufweist, die mindestens größer als von anderen Zugangspunkten in der Auflistung ist, und das Implementieren eines Inter-RAT-Zellenneuauswahl-Algorithmus, um das UE (102) mit dem bestimmten Zugangspunkt zu verbinden, um Zugang zu dem leitungsvermittelten Dienst zu erhalten, beinhaltet.

5. Verfahren gemäß Anspruch 1, das ferner, nach Bestimmen der Nichtverfügbarkeit der Auflistung, das Messen der Signalstärke von entdeckbaren leitungsvermittelten Netzzugangspunkten und das Implementieren eines Inter-RAT-Zellenneuauswahl-Algorithmus, um basierend auf der gemessenen Signalstärke der entdeckbaren leitungsvermittelten Netzzugangspunkte Zugang zu dem leitungsvermittelten Dienst zu erhalten, beinhaltet.

6. Verfahren gemäß Anspruch 1, das ferner, nach Bestimmen der Nichtverfügbarkeit der Auflistung, das Messen der Signalstärke von entdeckbaren leitungsvermittelten Netzzugangspunkten, das Einordnen der Zugangspunkte gemäß der gemessenen Signalstärke und das Implementieren eines Inter-RAT-Zellenneuauswahl-Algorithmus basierend auf dem Einordnen beinhaltet.

7. Verfahren gemäß Anspruch 1, das ferner, nach Bestimmen der Nichtverfügbarkeit der Auflistung, das Messen der Signalstärke von entdeckbaren leitungsvermittelten Netzzugangspunkten, das Auswählen eines bestimmten Zugangspunktes, der eine gemessene Signalstärke aufweist, die mindestens größer als andere gemessene Signalstärken ist, und das Implementieren eines Inter-RAT-Zellenneuauswahl-Algorithmus, um das UE (102) mit dem bestimmten Zugangspunkt zu verbinden, um Zugang zu dem leitungsvermittelten Dienst zu erhalten, beinhaltet.

8. Ein Multimodus-Mobil-Benutzergerät, das verwendet wird, um das Verfahren gemäß Anspruch 1 zu implementieren, das Folgendes beinhaltet:
eine Verarbeitungseinheit; und
eine Maschine für den leitungsvermittelten Rückfall (114), umfassend ein Steuerungsmodul (116), ein Zeitmessermodul (118), ein Zellenlistenmodul (120), ein Zellenneuauswahlmodul (122), ein Signalmessungsmodul (124) und ein Public-Land-Mobile-Network-Auswahlmodul (126); wobei, ein Systemspeicher verbunden mit der Verarbeitungseinheit, der Systemspeicher Anweisungen umfasst, die, wenn sie durch die Verarbeitungseinheit ausgeführt werden, die Verarbeitungseinheit veranlassen, mindestens ein Modul zu instanziieren, als Reaktion auf den Ablauf eines Zeitmessers, einen bestimmten Algorithmus auszuwählen, der, wenn implementiert, eine Verbindung des Benutzergeräts mit einem bestimmten leitungsvermittelten Netz initiiert, um Zugang zu einem leitungsvermittelten Dienst zu erhalten, wobei das mindestens eine Modul für Folgendes konfiguriert ist:
Initiieren einer Verbindung des UE mit einem paketvermittelten Netz;
Senden an das paketvermittelte Netz einer Anforderungsnachricht (130), um Zugang zu dem leitungsvermittelten Dienst zu erhalten;
Starten eines Zeitmessers zum Bestimmen der verstrichenen Dauer zwischen dem Senden der Anforderungsnachricht (130) und dem Empfangen einer Antwortnachricht (132) von dem paketvermittelten Netz, die die Ressourcenzuteilung bestätigt, um Zugang zu dem leitungsvermittelten Dienst zu erhalten; wobei das Steuerungsmodul (116) das Zeitmessermodul (118) aktiviert, um einen Zeitmesser zu starten, der mit der Anforderungsnachricht (130) assoziiert ist, zu einem willkürlichen Zeitpunkt, der mit dem Senden der Anforderungsnachricht (130) übereinstimmt, wobei ein auf null initialisierter Zeitmesser gestartet wird, der zum Verfolgen der Zeit weiterlaufen wird, bis die Antwortnachricht (132) von der Maschine für den leitungsvermittelten Rückfall (114) empfangen wird;
Auswählen, als Reaktion auf den Ablauf des Zeitmessers, wodurch die Abwesenheit einer Antwortnachricht (130) auf die Anforderungsnachricht (132) angezeigt wird, des bestimmten Algorithmus, der, wenn implementiert, eine Verbindung des Benutzergeräts mit dem bestimmten leitungsvermittelten Netz initiiert, um Zugang zu dem leitungsvermittelten Netz zu erhalten, und
Bestimmen, durch das Benutzergerät, einer Verfügbarkeit einer Auflistung, die eine gemessene Signalstärke der leitungsvermittelten Netzzugangspunkte spezifiziert.

## Revendications

1. Un procédé d'atténuation de retard de repli sur commutation de circuits, comprenant:
l'initiation, par un UE (102), d'une connexion de l'UE à un réseau à commutation de paquets, dans lequel,
l'UE (102) est un UE multimode (102), l'UE (102) met en attente une cellule particulière du réseau d'accès radio terrestre UMTS évolué (104), l'entité de gestion mobile (108) inscrit l'UE (102) auprès du réseau d'accès radio terrestre UMTS évolué (104) et du réseau d'accès radio terrestre UMTS/réseau d'accès radio GSM EDGE (106); en réponse au déclenchement d'une indication de lancement d'appel mobile (128) par l'UE (102), l'envoi, par le moteur de repli sur commutation de circuits (114) de l'UE (102) au réseau à commutation de paquets, d'une requête de repli sur commutation de circuits pour accéder à un service de commutation de circuits;
avec l'envoi du message de requête (130), le démarrage, par l'UE (102) simultanément à l'envoi du message de requête (130), d'un minuteur afin de déterminer la durée de temps écoulé entre l'envoi du message de requête (130) et la réception d'un message de réponse (132) du réseau à commutation de paquets qui confirme l'allocation de ressources pour accéder au service de commutation de circuits; et
la sélection, par l'UE (102) en réponse à l'expiration du minuteur, indiquant l'absence de message de réponse (132) au message de requête (130), d'un algorithme particulier qui, lorsqu'il est implémenté, initie une connexion de l'UE (102) à un réseau à commutation de circuits particulier pour accéder au service de commutation de circuits, le réseau à commutation de circuits particulier est le réseau d'accès radio terrestre UMTS/réseau d'accès radio GSM EDGE (106) ;
la détermination, par l'UE (102), de la disponibilité d'un listage qui spécifie la force du signal mesurée de points d'accès au réseau à commutation de circuits, le listage inclut la force du signal mesurée et une estampille temporelle associée de points d'accès au réseau à commutation de circuits, le listage peut être acquis en accédant à un module de liste de cellules par l'intermédiaire d'un module de commande (116) du moteur de repli sur commutation de circuits (114) ou en activant un module de mesure de signal (124) sur ordre du module de commande (116) du moteur de repli sur commutation de circuits (114), le module de commande (116) du moteur de repli sur commutation de circuits (114) active le module de resélection de cellules (122) afin d'implémenter un algorithme de resélection de cellules inter-RAT pour accéder à un service de commutation de circuits sur la base d'informations comprises dans le listage, et en tandem avec l'activation du module de mesure de signal (124), le module de commande (116) du moteur de repli sur commutation de circuits (114) active le module de sélection de réseau mobile terrestre public (126) afin d'initier un processus de sélection de réseau mobile terrestre public pour mettre en attente une cellule particulière du réseau d'accès radio terrestre UMTS/réseau d'accès radio GSM EDGE (106).

2. Le procédé de la revendication 1, comprenant en outre, sur détermination de la disponibilité du listage, l'implémentation d'un algorithme de resélection de cellules inter-RAT pour accéder au service de commutation de circuits sur la base de points d'accès compris dans le listage.

3. Le procédé de la revendication 1, comprenant en outre, sur détermination de la disponibilité du listage, le classement de points d'accès compris dans le listage selon la force du signal, et l'implémentation d'un algorithme de resélection de cellules inter-RAT pour accéder au service de commutation de circuits sur la base du classement.

4. Le procédé de la revendication 1, comprenant en outre, sur détermination de la disponibilité du listage, la sélection d'un point d'accès particulier compris dans le listage ayant une force du signal au moins supérieure à celle d'autres points d'accès compris dans le listage, et l'implémentation d'un algorithme de resélection de cellules inter-RAT afin de connecter l'UE (102) au point d'accès particulier pour accéder au service de commutation de circuits.

5. Le procédé de la revendication 1, comprenant en outre, sur détermination de l'indisponibilité du listage, la mesure de la force du signal de points d'accès au réseau à commutation de circuits pouvant être découverts, et l'implémentation d'un algorithme de resélection de cellules inter-RAT pour accéder au service de commutation de circuits sur la base de la force du signal mesurée des points d'accès au réseau de commutation de circuits pouvant être découverts.

6. Le procédé de la revendication 1, comprenant en outre, sur détermination de l'indisponibilité du listage, la mesure de la force du signal de points d'accès au réseau à commutation de circuits pouvant être découverts, le classement de points d'accès selon la force du signal mesurée, et l'implémentation d'un algorithme de resélection de cellules inter-RAT pour accéder au service de commutation de circuits sur la base du classement.

7. Le procédé de la revendication 1, comprenant en outre, sur détermination de l'indisponibilité du listage, la mesure de la force du signal de points d'accès au réseau à commutation de circuits pouvant être découverts, la sélection d'un point d'accès particulier ayant une force du signal mesurée au moins supérieure à d'autres forces du signal mesurées, et l'implémentation d'un algorithme de resélection de cellules inter-RAT afin de connecter l'UE (102) au point d'accès particulier pour accéder au service de commutation de circuits.

8. Un équipement utilisateur mobile multimode, utilisé pour implémenter le procédé selon la revendication 1, comprenant:
une unité centrale; et
un moteur de repli sur commutation de circuits (114), incluant un module de commande (116), un module de minuteur (118), un module de liste de cellules (120), un module de resélection de cellules (122), un module de mesure de signal (124), et un module de sélection de réseau mobile terrestre public (126); dans lequel, une mémoire système connectée à l'unité centrale, la mémoire système incluant des instructions qui, lorsqu'elles sont exécutées par l'unité centrale, amènent l'unité centrale à instancier au moins un module afin de sélectionner, en réponse à l'expiration d'un minuteur, un algorithme particulier qui, lorsqu'il est implémenté, initie la connexion de l'équipement utilisateur à un réseau à commutation de circuits particulier pour accéder à un service de commutation de circuits, l'au moins un module étant configuré pour:
initier la connexion de l'UE à un réseau à commutation de paquets;
envoyer au réseau à commutation de paquets un message de requête (130) pour accéder au service de commutation de circuits;
démarrer un minuteur afin de déterminer la durée de temps écoulé entre l'envoi du message de requête (130) et la réception d'un message de réponse (132) du réseau à commutation de paquets qui confirme l'allocation de ressources pour accéder au service de commutation de circuits; le module de commande (116) active le module de minuteur (118) afin de démarrer un minuteur qui est associé au message de requête (130), à un point dans le temps arbitraire correspondant à l'envoi du message de requête (130), un minuteur initialisé à zéro est démarré qui peut continuer à suivre le temps jusqu'à ce que le message de réponse (132) soit reçu par le moteur de repli sur commutation de circuits (114);
sélectionner, en réponse à l'expiration du minuteur indiquant l'absence de message de réponse (130) au message de requête (132), l'algorithme particulier qui, lorsqu'il est implémenté, initie une connexion de l'équipement utilisateur au réseau à commutation de circuits particulier pour accéder au service de commutation de circuits, et
déterminer, par l'équipement utilisateur, la disponibilité d'un listage qui spécifie la force du signal mesurée de points d'accès au réseau à commutation de circuits.
